# FASCICULE DE BREVET EUROPEEN

(11) **EP 3 955 063 B1**
(45) Date de publication et mention de la délivrance du brevet: **03.07.2024**
(21) Numéro de dépôt: 20190621.1
(22) Date de dépôt: 12.08.2020
(51) Int. Cl.: G04B 13/00, G04B 13/02, F16H 49/00

(54) **MÉCANISME HORLOGER MUNI D'UN ENGRENAGE MAGNÉTIQUE**
UHRMECHANISMUS MIT MAGNETISCHEM GETRIEBERAD
WATCH MECHANISM PROVIDED WITH A MAGNETIC GEAR

(43) Date de publication de la demande: 16.02.2022
(73) Titulaire: The Swatch Group Research and Development Ltd, 2074 Marin (CH)
(72) Inventeur: BORN, Jean-Jacques, 1110 Morges (CH); MIGNOT, Jean-Pierre, 25300 Pontarlier (FR); IMBODEN, Matthias, 2072 St-Blaise (CH); NICOLAS, Cédric, 2000 Neuchâtel (CH)
(74) Mandataire: ICB SA

(56) Documents cités:
- EP-A1- 0 044 905
- CH-A2- 711 932
- DE-B- 1 087 275

## Description

### Domaine technique de l'invention

L'invention concerne le domaine des engrenages magnétiques formé d'une première roue et d'une seconde roue en relation d'engrènement magnétique, la première roue étant munie de premiers pôles magnétiques agencés circulairement et définissant une première denture magnétique, la seconde roue étant munie de dents en matériau ferromagnétique ou de seconds pôles magnétiques, ces dents ou seconds pôles magnétiques étant agencés circulairement et définissant une seconde denture magnétique.

En particulier, l'invention concerne un mécanisme horloger incorporant un engrenage magnétique.

### Arrière-plan technologique

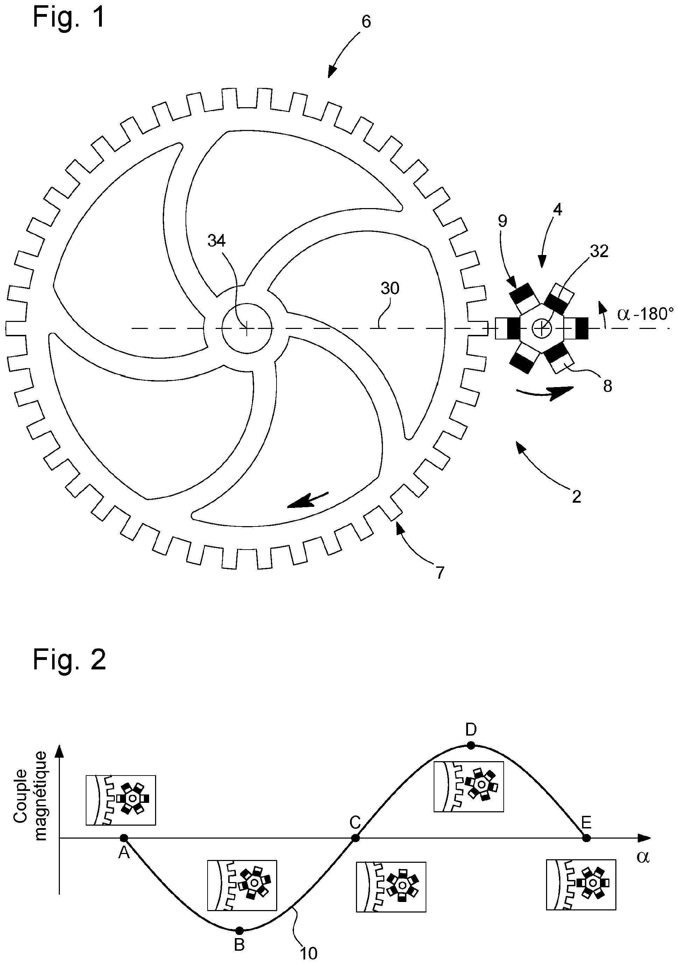

La Figure 1 montre un engrenage magnétique 2 comprenant une petite roue 4 munie de six aimants bipolaires 8 ayant une aimantation radiale et alternée, ces six aimants étant agencés régulièrement autour d'une partie centrale de la petite roue de sorte à définir une denture magnétique 9 ayant six dents magnétiques, et une grande roue 6 située dans un plan général dans lequel s'étend également la petite roue et comprenant une jante ferromagnétique avec une denture périphérique 7. La roue 4 a un axe central 32 définissant un axe de rotation de cette petite roue et la roue 6 a un axe central 34. Dans un cas général où la grande roue tourne également, l'axe central 34 définit un axe de rotation de cette grande roue. Dans un cas particulier, la grande roue est agencée fixement sur un support (platine ou pont d'un mouvement horloger) et la petite roue est agencée de manière à tourner à la périphérie de la grande roue lorsque cette petite roue est entraînée en rotation par un dispositif moteur.

La Figure 2 donne une courbe 10 d'un couple de force magnétique parasite qui s'exerce sur la petite roue 4 lorsqu'elle tourne et « roule » sur un cercle géométrique lié à la grande roue 6 et centré sur l'axe central 34 de cette dernière. Ce couple de force magnétique parasite présente une variation d'intensité périodique en fonction de la position angulaire α de la petite roue 4. L'angle α est mesuré depuis un demi-axe de référence 30 partant de l'axe de rotation 32 de la petite roue et interceptant l'axe central / l'axe de rotation de la grande roue 6. Par définition, le demi-axe de référence 30 est perpendiculaire à l'axe de rotation de la petite roue 4. Comme montré à la Figure 2, la période de la courbe sinusoïdale 10 correspond à l'angle au centre entre deux aimants bipolaires successifs et donc à l'angle parcouru par la petite roue pour que l'engrenage magnétique 2 effectue un pas, c'est-à-dire que la petite roue 4 tourne de sorte à passer d'un aimant bipolaire (définissant une dent magnétique ou, par analogie à un engrenage mécanique classique, correspondant à un creux entre deux dents magnétiques) aligné sur le demi-axe de référence 30 à un aimant bipolaire suivant (définissant une dent magnétique suivante ou un creux suivant entre deux dents magnétiques) qui vient à son tour s'aligner sur ce demi-axe de référence et que, dans le même temps, la grande roue 6 tourne (ou l'axe de rotation de la petite roue tourne autour de l'axe central 34 de la grande roue) de sorte à passer d'une dent alignée sur le demi-axe de référence à une dent suivante qui vient à son tour s'aligner sur ce demi-axe de référence. On notera que la grande roue subit aussi un couple de force magnétique parasite correspondant. Pour des raisons liées à la clarté du dessin, l'angle de rotation / la position angulaire représenté à la Figure 1 par une flèche est mesuré(e) depuis un demi-axe complémentaire au demi-axe de référence 30 (ces deux demi-axes formant ensemble un axe géométrique) et correspond donc à α-180°. Le point A à la Figure 2 correspond à un angle α égal à zéro ou à un multiple entier de 360°/N, avec N égal au nombre d'aimants bipolaires 8 et donc au nombre de dents magnétiques de la denture magnétique 9. L'angle 360°/N correspond ainsi à une période angulaire ou un pas angulaire de la denture magnétique 9.

Les positions angulaires de l'engrenage magnétique 2 aux points A et E, sur le graphe de la Figure 2, correspondent à des positions d'équilibre stable pour cet engrenage magnétique, alors que la position angulaire de cet engrenage magnétique au point C correspond à une position d'équilibre instable. Les points B et D, sur le graphe de la Figure 2, correspondent aux deux intensités maximales (respectivement positive et négative) et donc à l'amplitude du couple de force magnétique parasite. On remarquera que le couple de force magnétique parasite intervient en l'absence de transmission d'un couple de force entre les deux roues, ce couple de force magnétique parasite tendant à ramener un aimant bipolaire 8 en face d'une dent en matériau ferromagnétique de la roue 6 et donc à aligner sur le demi-axe de référence 30 un pôle magnétique de la roue 4 et une dent ferromagnétique de la roue 6 (situation aux points A et E de la courbe 10), les positions angulaires des deux roues correspondant alors à une énergie potentielle minimale pour l'engrenage magnétique.

Le couple de force magnétique parasite (nommé également par la suite 'couple magnétique parasite') peut être important, éventuellement aussi grand (voire même plus grand) que le couple de force magnétique pouvant être transmis entre les deux roues de l'engrenage magnétique. Pour vaincre ce couple perturbateur, un dispositif moteur entraînant une des deux roues doit pouvoir fournir un couple de force bien supérieur au couple de force magnétique transmis dans l'engrenage magnétique pour éviter qu'il bloque, ce qui augmente inutilement sa consommation en énergie. De plus, à cause de sa variation sinusoïdale, le couple perturbateur introduit une relativement grande variation dans le couple de force magnétique transmis dans l'engrenage magnétique. En effet, lorsque la petite roue 4 est entraînée dans un sens de rotation positif, le couple perturbateur freine cette petite roue durant une première demi-période angulaire de la denture magnétique 9, depuis chaque position d'alignement d'un aimant bipolaire 8 sur le demi-axe de référence 30, et entraîne cette petite roue durant la seconde demi-période angulaire suivant cette première demi-période angulaire (voir Fig. 2). Il en va de même pour la grande roue 6 sur chaque période magnétique de sa denture magnétique 7, avec une inversion du signe mathématique. D'autres documents encore divulguent des engrenages magnétiques tels que dans la demande EP0044905A1 ou le brevet DE1087275B, mais aucun de ces documents ne prévoit de pallier aux problèmes du couple magnétique parasite pouvant être présent dans ces types d'engrenages, à savoir les engrenages magnétiques,

### Résumé de l'invention

L'invention a pour objectif de pallier le problème du couple de force magnétique parasite dans un engrenage magnétique, en éliminant au moins en majeure partie ce couple perturbateur.

A cet effet, la présente invention concerne un mécanisme comprenant un engrenage magnétique formé d'une première roue et d'une seconde roue, la première roue étant munie de N premiers pôles magnétiques alternés qui sont agencés circulairement et définissent une première denture magnétique, la seconde roue étant munie de dents en matériau ferromagnétique ou de seconds pôles magnétiques alternés et agencés circulairement, ces dents ou ces seconds pôles magnétiques définissant une seconde denture magnétique qui présente un couplage magnétique avec la première denture magnétique de sorte que, lorsqu'une des première et seconde roues est entraînée en rotation, cette roue roule, via le couplage magnétique, sur un cercle géométrique centré sur l'autre roue et lié à cette autre roue. Selon l'invention, le mécanisme comprend en outre un élément ferromagnétique ou un ensemble d'éléments ferromagnétiques agencé relativement à la première roue de sorte à compenser au moins une majeure partie d'un couple magnétique parasite que subit cette première roue et résultant dudit couplage magnétique, ce couple magnétique parasite ayant une variation d'intensité périodique en fonction de la position angulaire de la première roue relativement à un demi-axe de référence partant de l'axe central de la première roue et interceptant l'axe central de la seconde roue.

On notera que le roulement d'une des deux roues sur un cercle géométrique centré sur l'autre roue et lié à cette autre roue se fait sans contact mécanique, ledit cercle géométrique présentant un rayon qui dépend des pas angulaires de chacune des deux roues et de la distance entre les axes centraux respectifs de ces deux roues. Par 'couple magnétique', on comprend un couple de force magnétique.

Selon un mode de réalisation principal, l'élément ferromagnétique ou l'ensemble d'éléments ferromagnétiques est agencé de manière à engendrer un couple magnétique de compensation qui présente également une variation d'intensité périodique en fonction de la position angulaire de la première roue relativement au demi-axe de référence, le couple magnétique de compensation et le couple magnétique parasite présentant un déphasage de sensiblement 180°.

Selon une variante avantageuse, l'élément ferromagnétique ou l'ensemble d'éléments ferromagnétiques présente un plan de symétrie comprenant le demi-axe de référence et l'axe central de la première roue.

Selon une variante avantageuse, l'élément ferromagnétique ou l'ensemble d'éléments ferromagnétiques est agencé de manière à engendrer globalement sur la première roue une force d'attraction magnétique de compensation qui est alignée sur le demi-axe de référence avec un sens opposé à celui d'une force d'attraction magnétique globale exercée par la seconde roue sur la première roue.

### Brève description des figures

L'invention sera décrite ci-après de manière détaillée à l'aide des dessins annexés, donnés à titre d'exemples nullement limitatifs, dans lesquels :
- La Figure 1, déjà décrite, montre un engrenage magnétique selon l'art antérieur.
- La Figure 2, déjà décrite, représente graphiquement un couple magnétique parasite intervenant dans l'engrenage magnétique de la Figure 1.
- La Figure 3 montre un premier mode de réalisation d'un mécanisme incorporant un engrenage magnétique selon l'invention (seul l'engrenage magnétique étant représenté).
- La Figure 4 représente graphiquement un couple magnétique de compensation, engendré par un élément ferromagnétique additionnel, intervenant dans l'engrenage magnétique de la Figure 3.
- La Figure 5 représente graphiquement un couple magnétique parasite résiduel dans l'engrenage magnétique de la Figure 3.
- La Figure 6 montre une première variante du premier mode de réalisation selon l'invention.
- La Figure 7 montre une deuxième variante du premier mode de réalisation selon l'invention.
- La Figure 8 montre un deuxième mode de réalisation d'un mécanisme incorporant un engrenage magnétique selon l'invention (seul l'engrenage magnétique étant représenté).

### Description détaillée de l'invention

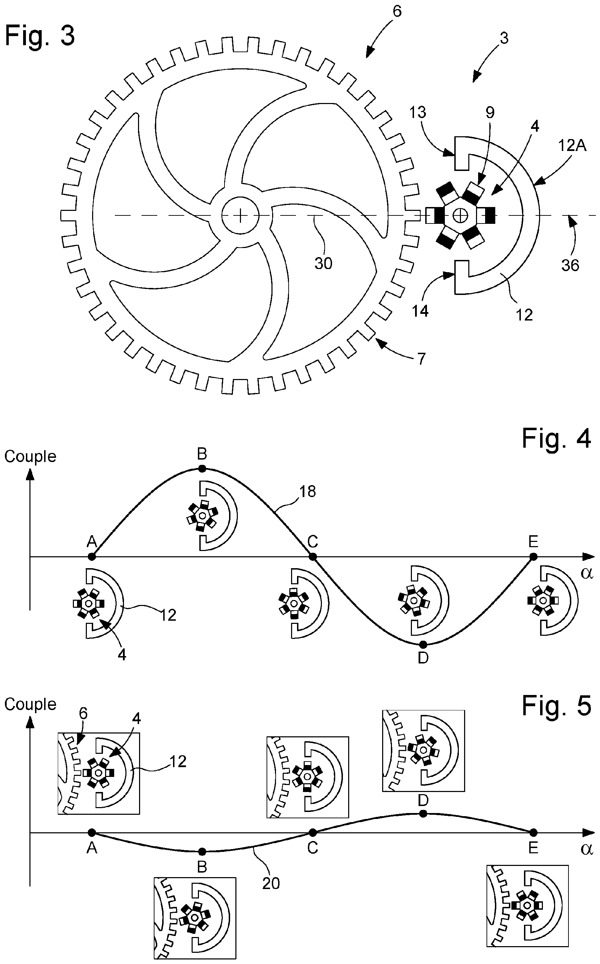

En référence aux Figures 3 à 7, on décrira ci-après un premier mode de réalisation d'un engrenage magnétique selon l'invention.

Dans une première variante, montrée aux Fig. 3 à 5, l'engrenage magnétique 3 est formé d'une première roue 4 et d'une seconde roue 6 déjà décrites en référence à la Figure 1. De manière générale, la première roue est munie de N premiers pôles magnétiques alternés qui sont agencés circulairement et définissent une première denture magnétique. Dans la variante considérée, la première roue 4 comprend six aimants bipolaires présentant une aimantation radiale, les six pôles magnétiques extérieurs formant une première denture magnétique 9. Comme les pôles magnétiques sont agencés de manière circulaire avec une polarisation alternée, leur nombre est un nombre pair. De manière générale, la seconde roue est munie de dents en matériau ferromagnétique ou de seconds pôles magnétiques alternés et agencés circulairement, ces dents ou ces seconds pôles magnétiques définissant une seconde denture magnétique qui présente un couplage magnétique avec la première denture magnétique de sorte que, lorsqu'une des première et seconde roues est entraînée en rotation, cette roue roule, via le couplage magnétique, sur un cercle géométrique centré sur l'autre roue et lié à cette autre roue. Dans la variante considérée, la seconde roue 6 comprend une jante en matériau ferromagnétique définissant à son pourtour extérieur des dents qui forment une seconde denture magnétique 7. Les deux roues 4 et 6 s'étendent dans un même plan général et sont agencées de sorte que leurs dentures magnétiques ne se touchent pas. Le couple magnétique parasite intervenant entre les deux roues 4 et 6 a déjà été présenté précédemment en référence à la Figure 2.

Pour compenser le couple magnétique parasite susmentionné, l'engrenage magnétique 3 comprend en outre un élément ferromagnétique 12 agencé relativement à la première roue 4 de sorte à compenser et donc annuler au moins une majeure partie de ce couple magnétique parasite (courbe 10 à la Fig.2) que subit cette première roue et résultant du couplage magnétique entre les deux roues 4 et 6.

L'élément ferromagnétique 12 est agencé de préférence dans le plan général des deux roues de l'engrenage magnétique 3. Cet élément ferromagnétique comprend deux parties d'extrémité 13 et 14 qui s'étendent en direction de la première denture 9 de la roue 4, la première partie d'extrémité 14 étant située à une position angulaire égale à 90° alors que la seconde partie d'extrémité est située à une position angulaire égale à 270°. De manière générale, chacune des parties d'extrémité est positionnée à un angle, relativement au demi-axe de référence (30), dont la valeur est égale à (M-1/2)·360°/N avec M étant un nombre entier supérieur à '1' et inférieur à N. On notera que, dans une variante plus complexe, d'autres parties saillantes, en sus des deux parties d'extrémité, peuvent être prévues en étant chacune positionnées à un angle différent parmi la pluralité d'angles définis par la valeur M entre '1' et N dans la formule mathématique susmentionnée. Une partie intermédiaire 12A relie les deux parties d'extrémité. Cette partie intermédiaire a une forme de demi-cercle qui s'étend dans le plan général de la roue 4, du côté opposé à la roue 6. On notera que cette partie intermédiaire génère un faible couple magnétique sur la roue 4, bien inférieur au couple magnétique parasite engendré par la roue 6 et au couple magnétique de compensation engendré globalement par l'élément ferromagnétique 12 et principalement par les deux parties d'extrémité 13 et 14 qui sont agencées rentrantes en direction de la denture 9 de la roue 4, relativement au cercle défini par la partie intermédiaire, et présentent donc une orientation radiale.

L'élément ferromagnétique 12 est agencé de manière à engendrer un couple magnétique de compensation 18, représenté par une courbe à la Figure 4, ayant une variation d'intensité périodique, de même période que la variation d'intensité périodique du couple magnétique parasite, en fonction de la position angulaire α de la roue 4 relativement au demi-axe de référence 30. Avantageusement, le couple magnétique de compensation et le couple magnétique parasite présentent un déphasage de sensiblement 180°. De préférence, l'élément ferromagnétique 12 est configuré de manière que l'intensité maximale (l'amplitude) du couple magnétique de compensation est sensiblement égale à celle du couple magnétique parasite. A la Figure 5 est représenté un couple magnétique résiduel éventuel s'exerçant sur la roue 4. De plus, l'élément ferromagnétique 12, en particulier ses deux parties d'extrémité, présente un plan de symétrie 36 comprenant le demi-axe de référence 30 et l'axe central 32 (axe de rotation) de la première roue 4. Cette caractéristique est avantageuse pour éviter que l'élément ferromagnétique engendre une force d'attraction magnétique sur la roue 4 ayant une orientation perpendiculaire au demi-axe de référence 30. Une telle force d'attraction magnétique serait perpendiculaire à la force d'attraction magnétique radiale exercée globalement par la roue 6 sur la roue 4, de sorte qu'une telle force d'attraction magnétique perpendiculaire engendrerait une force de frottement des pivots de cette roue 4 dans des paliers associés (non représentés) qui définissent l'axe de rotation 32.

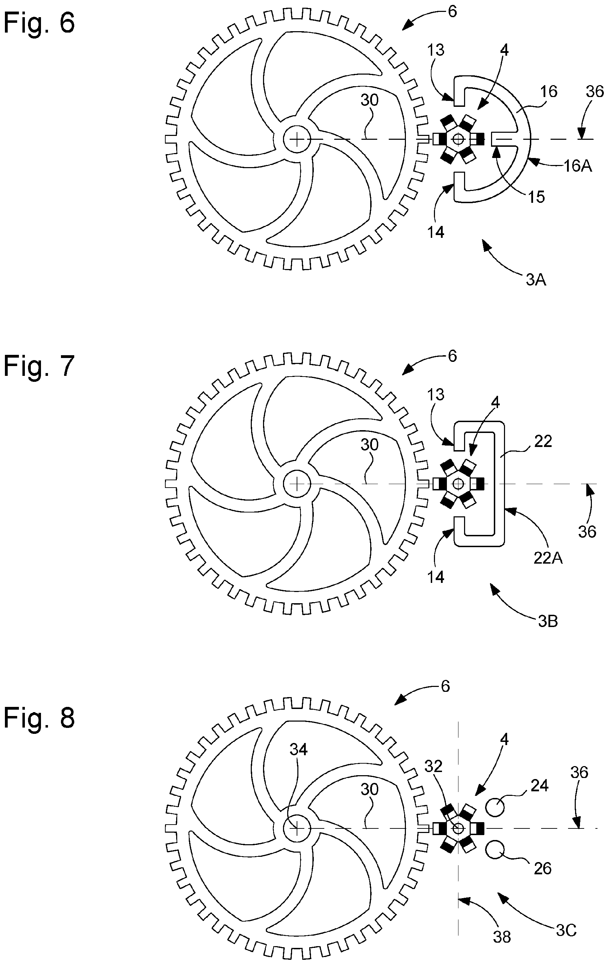

Selon un perfectionnement de la première variante, il est prévu de configurer l'élément ferromagnétique de manière à engendrer globalement sur la première roue 4 une force d'attraction magnétique de compensation qui est alignée sur le demi-axe de référence 30 avec un sens opposé à celui d'une force d'attraction magnétique radiale exercée globalement par la seconde roue 6 sur la première roue 4. On remarquera que la première variante présente déjà une petite force d'attraction magnétique de compensation résultant de la partie intermédiaire en demi-cercle, mais cette partie intermédiaire sert principalement à former un circuit magnétique de faible réluctance magnétique entre les deux parties d'extrémité 13 et 14 et sa force d'attraction magnétique sur la première roue est bien moindre que la force d'attraction magnétique radiale exercée par la seconde roue sur cette première roue, ces deux forces d'attraction n'étant pas du même ordre de grandeur. Des réalisations spécifiques, correspondant au perfectionnement prévu, font les objets d'une deuxième variante et d'une troisième variante montrées respectivement aux Figures 6 et 7.

Dans la deuxième variante de la Fig. 6, l'engrenage magnétique 3A comprend un élément ferromagnétique 16 muni, en plus des deux parties d'extrémité 13 et 14 déjà décrites, d'une partie de compensation 15 faisant saillie en direction de la première denture 9 depuis la partie intermédiaire 16A, cette partie de compensation étant positionnée à un angle de 180° relativement au demi-axe de référence 30, et servant à former la majeure partie de la force d'attraction magnétique de compensation. On remarquera que la partie de compensation 15 présente le désavantage d'augmenter un couple magnétique parasite global exercé sur la roue 4. Cependant, on peut configurer l'élément ferromagnétique 16 de sorte que les deux parties d'extrémité 13 et 14 compensent la majeure partie ou, de préférence, sensiblement entièrement les deux couples magnétiques engendrés respectivement par la roue 6 et la partie de compensation 15 sur la roue 4. Dans une variante avantageuse, on peut diminuer le couple magnétique additionnel engendré par la partie de compensation en élargissant celle-ci (tout en augmentant si nécessaire la distance à la première denture magnétique) de manière que son extrémité libre présente un profil en arc de cercle, centrée sur l'axe de rotation 32 de la première roue, à une distance minimale de la première denture magnétique 9 et s'étend sensiblement sur une période angulaire de cette première denture magnétique, éventuellement un peu moins. L'homme du métier saura optimiser le profil et l'étendue angulaire de l'extrémité libre de la partie de compensation pour diminuer au maximum le couple magnétique additionnel.

Dans la troisième variante de la Fig. 7, l'engrenage magnétique 3B comprend un élément ferromagnétique 22 dont la partie intermédiaire 22A est configurée de manière qu'elle se rapproche de la première denture magnétique 9 de la première roue 4 en direction de la position angulaire égale à 180°, mesurée depuis le demi-axe de référence 30, en présentant ainsi une distance minimale avec cette première denture magnétique à la position angulaire 180°. Cette troisième variante présente l'avantage de permettre d'obtention d'une force d'attraction magnétique de compensation relativement grande, notamment sensiblement égale à la force d'attraction magnétique radiale exercée globalement par la seconde roue 6 sur la première roue 4, sans engendrer un couple magnétique important sur cette dernière. En effet, le couple magnétique engendré par la partie intermédiaire 22A est significativement inférieur à celui engendré par la partie intermédiaire 16A de la deuxième variante telle que représentée à la Figure 6. Pour diminuer encore ce couple magnétique additionnel qui s'applique à la première roue, l'homme du métier saura optimiser la forme de la partie intermédiaire 22A, en particulier sa partie médiane.

En référence à la Figure 8, on décrira une variante préférée d'un deuxième mode de réalisation d'un engrenage magnétique 3C selon l'invention, lequel est caractérisé par l'agencement d'un ensemble d'éléments ferromagnétiques distincts pour compenser au moins une majeure partie du couple magnétique parasite (courbe 10, Fig. 2) que subit la première roue 4, lequel résulte du couplage magnétique à la seconde roue 6, en particulier à la seconde denture magnétique 7. L'ensemble d'éléments ferromagnétiques comprend au moins deux éléments 24 et 26 chacun positionnés à un angle différent, relativement au demi-axe de référence 30, dont la valeur est égale à (M-1/2)·360°/N où M est un nombre entier supérieur à '1' et inférieur à N.

Comme pour le premier mode de réalisation, il est prévu dans une variante générale que l'ensemble d'éléments ferromagnétiques est agencé de manière à engendrer un couple magnétique de compensation 18 (voir Fig. 4) qui présente également une variation d'intensité périodique en fonction de la position angulaire de la première roue relativement au demi-axe de référence 30, le couple magnétique de compensation ayant une même période angulaire que le couple magnétique parasite et présentant avec ce dernier un déphasage de sensiblement 180°.

Dans une première variante avantageuse, l'ensemble d'éléments ferromagnétiques est agencé en majeure partie d'un côté opposé à la seconde roue 6 relativement à un plan géométrique 38 comprenant l'axe central 32 de la première roue et perpendiculaire au demi-axe de référence 30. Ainsi, l'ensemble d'éléments ferromagnétiques est agencé de manière à engendrer globalement sur la première roue 4 une force d'attraction magnétique de compensation qui est alignée sur le demi-axe de référence 30 avec un sens opposé à celui d'une force d'attraction magnétique radiale exercée globalement par la seconde roue sur la première roue. Dans la variante préférée qui est représentée à la Fig. 8, l'ensemble d'éléments ferromagnétiques, constitué par les deux éléments 24 et 26, est agencé entièrement d'un côté du plan géométrique 38 qui est opposé à la seconde roue 6.

Dans une deuxième variante avantageuse, l'ensemble d'éléments ferromagnétiques présente un plan de symétrie 36 comprenant le demi-axe de référence 30 et l'axe central 32 de la première roue. La variante préférée représentée à la Fig. 8 entre également dans cette deuxième variante avantageuse. L'avantage résultant d'un tel agencement a déjà été décrit.

## Revendications

1. Mécanisme horloger comprenant un engrenage magnétique (3) formé d'une première roue (4) et d'une seconde roue (6), la première roue étant munie de N premiers pôles magnétiques alternés qui sont agencés circulairement et définissent une première denture magnétique (9), la seconde roue étant munie de dents en matériau ferromagnétique ou de seconds pôles magnétiques alternés et agencés circulairement, ces dents ou ces seconds pôles magnétiques définissant une seconde denture magnétique (7) qui présente un couplage magnétique avec la première denture magnétique de sorte que, lorsqu'une des première et seconde roues est entraînée en rotation, cette roue (4) roule, via le couplage magnétique, sur un cercle géométrique centré sur l'autre roue (6) et lié à cette autre roue ; **caractérisé en ce que** le mécanisme comprend en outre un élément ferromagnétique (12; 12A; 16) ou un ensemble d'éléments ferromagnétiques (24, 26) agencé relativement à la première roue de sorte à compenser au moins une majeure partie d'un couple magnétique parasite (10) que subit cette première roue et résultant dudit couplage magnétique, ce couple magnétique parasite ayant une variation d'intensité périodique en fonction de la position angulaire (α) de la première roue relativement à un demi-axe de référence (30) partant de l'axe central (32) de la première roue et interceptant l'axe central (34) de la seconde roue.

2. Mécanisme horloger selon la revendication 1, **caractérisé en ce que** ledit élément ferromagnétique ou l'ensemble d'éléments ferromagnétiques est agencé de manière à engendrer un couple magnétique de compensation (18) qui présente également une variation d'intensité périodique en fonction de la position angulaire de la première roue relativement audit demi-axe de référence (30), le couple magnétique de compensation et le couple magnétique parasite présentant un déphasage de sensiblement 180°.

3. Mécanisme horloger selon la revendication 1 ou 2, **caractérisé en ce que** ledit élément ferromagnétique ou l'ensemble d'éléments ferromagnétiques présente un plan de symétrie (36) comprenant le demi-axe de référence (30) et l'axe central (32) de la première roue.

4. Mécanisme horloger selon une quelconque des revendications précédentes, **caractérisé en ce que** ledit élément ferromagnétique ou l'ensemble d'éléments ferromagnétiques est agencé de manière à engendrer globalement sur la première roue une force d'attraction magnétique de compensation qui est alignée sur le demi-axe de référence (30) avec un sens opposé à celui d'une force d'attraction magnétique radiale exercée globalement par la seconde roue sur la première roue.

5. Mécanisme horloger selon une quelconque des revendications précédentes, **caractérisé en ce que** l'élément ferromagnétique (12, 16, 22) comprend deux parties d'extrémité (13, 14) qui s'étendent en direction de la première denture (9), chacune positionnée à un angle, relativement au demi-axe de référence (30), dont la valeur est égale à (M-1/2)·360°/N avec M étant un nombre entier supérieur à '1' et inférieur à N, et une partie intermédiaire (12A, 16A, 22A) reliant les deux parties d'extrémité.

6. Mécanisme horloger selon la revendication 5 dépendante de la revendication 4, **caractérisé en ce que** l'élément ferromagnétique (16) comprend en outre une partie de compensation (15) faisant saillie en direction de la première denture (9) depuis la partie intermédiaire (16A), cette partie de compensation étant positionnée à un angle, relativement au demi-axe de référence (30), dont la valeur est égale à 180° et servant à former la majeure partie de la force d'attraction magnétique de compensation.

7. Mécanisme horloger selon la revendication 5 dépendante de la revendication 4, **caractérisé en ce que** la partie intermédiaire (22A) de l'élément ferromagnétique (22) est configurée de manière que cette partie intermédiaire se rapproche de la première denture magnétique (9) en direction de la position angulaire égale à 180°, mesurée depuis le demi-axe de référence (30), en présentant ainsi une distance minimale avec cette première denture magnétique à la position angulaire 180°.

8. Mécanisme horloger selon une quelconque des revendications 1 à 4, **caractérisé en ce que** ledit ensemble d'éléments ferromagnétiques comprend deux éléments (24, 26) chacun positionnés à un angle, relativement au demi-axe de référence (30), dont la valeur est égale à (M-1/2)·360°/N avec M étant un nombre entier supérieur à '1' et inférieur à N.

9. Mécanisme horloger selon la revendication 4 ou la revendication 8 dépendante de la revendication 4, **caractérisé en ce que** l'ensemble d'éléments ferromagnétiques (24, 26) est agencé en majeure partie ou, de préférence, entièrement d'un côté opposé à la seconde roue (6) relativement à un plan géométrique (38) comprenant l'axe central (32) de la première roue et perpendiculaire au demi-axe de référence (30).

## Patentansprüche

1. Uhrwerk mit einem magnetischen Zahnrad (3), das aus einem ersten Rad (4) und einem zweiten Rad (6) besteht, wobei das erste Rad mit N abwechselnden ersten Magnetpolen versehen ist, die kreisförmig angeordnet sind und eine erste magnetische Verzahnung (9) festlegen, und das zweite Rad mit Zähnen aus ferromagnetischem Material oder mit abwechselnden zweiten Magnetpolen versehen ist, die kreisförmig angeordnet sind, wobei diese Zähne oder zweiten Magnetpole eine zweite magnetische Verzahnung (7) festlegen, die eine magnetische Kopplung mit der ersten magnetischen Verzahnung aufweist, so dass, wenn eines der ersten und zweiten Räder in Drehung versetzt wird, dieses Rad (4) über die magnetische Kopplung auf einem geometrischen Kreis rollt, der auf das andere Rad (6) zentriert und mit diesem anderen Rad verbunden ist ; **dadurch gekennzeichnet, dass** der Mechanismus ferner ein ferromagnetisches Element (12; 12A; 16) oder eine Gruppe von ferromagnetischen Elementen (24, 26) umfasst, die relativ zum ersten Rad so angeordnet sind, dass sie zumindest einen Großteil eines parasitären magnetischen Drehmoments (10) kompensieren, das dieses erste Rad erfährt und das sich aus der magnetischen Kopplung ergibt, wobei dieses parasitäre magnetische Drehmoment eine periodische Intensitätsänderung als Funktion der Winkelposition (α) des ersten Rades relativ zu einer halben Bezugsachse (30) aufweist, die von der Mittelachse (32) des ersten Rades ausgeht und die Mittelachse (34) des zweiten Rades schneidet.

2. Uhrwerk nach Anspruch 1, **dadurch gekennzeichnet, dass** das ferromagnetische Element oder die Gruppe von ferromagnetischen Elementen so angeordnet ist, dass sie ein magnetisches Kompensationsdrehmoment (18) erzeugt, das ebenfalls eine periodische Intensitätsänderung in Abhängigkeit von der Winkelposition des ersten Rades relativ zu der Bezugshalbachse (30) aufweist, wobei das magnetische Kompensationsdrehmoment und das magnetische Stördrehmoment eine Phasenverschiebung von im Wesentlichen 180° aufweisen.

3. Uhrwerk nach Anspruch 1 oder 2, **dadurch gekennzeichnet, dass** das ferromagnetische Element oder die Gruppe von ferromagnetischen Elementen eine Symmetrieebene (36) aufweist, die die Bezugshalbachse (30) und die Mittelachse (32) des ersten Rades umfasst.

4. Uhrwerk nach einem der vorhergehenden Ansprüche, **dadurch gekennzeichnet, dass** das ferromagnetische Element oder die Gruppe von ferromagnetischen Elementen so angeordnet ist, dass sie insgesamt auf das erste Rad eine kompensierende magnetische Anziehungskraft erzeugt, die auf die Bezugshalbachse (30) mit einer Richtung ausgerichtet ist, die derjenigen einer radialen magnetischen Anziehungskraft entgegengesetzt ist, die insgesamt durch das zweite Rad auf das erste Rad ausgeübt wird.

5. Uhrwerk nach einem der vorhergehenden Ansprüche, **dadurch gekennzeichnet, dass** das ferromagnetische Element (12, 16, 22) zwei Endabschnitte (13, 14) umfasst, die sich in Richtung der ersten Verzahnung (9) erstrecken, wobei jeder in einem Winkel positioniert ist, relativ zur Bezugshalbachse (30), dessen Wert gleich (M -1/2)·360°/N ist, wobei M eine ganze Zahl größer als ,1' und kleiner als N ist, und einen Zwischenabschnitt (12A, 16A, 22A), der die beiden Endabschnitte verbindet.

6. Uhrwerk nach Anspruch 5, abhängig von Anspruch 4, **dadurch gekennzeichnet, dass** das ferromagnetische Element (16) ferner einen Kompensationsabschnitt (15) umfasst, der von dem Zwischenabschnitt (16A) in Richtung der ersten Verzahnung (9) vorsteht, wobei der Kompensationsabschnitt in einem Winkel relativ zu der Bezugshalbachse (30) positioniert ist, dessen Wert gleich 180° ist und der dazu dient, den Hauptteil der kompensierenden magnetischen Anziehungskraft zu bilden.

7. Uhrwerk nach Anspruch 5, abhängig von Anspruch 4, **dadurch gekennzeichnet, dass** der Zwischenabschnitt (22A) des ferromagnetischen Elements (22) so konfiguriert ist, dass dieser Zwischenabschnitt sich der ersten magnetischen Verzahnung (9) in Richtung der Winkelposition gleich 180°, gemessen von der Bezugshalbachse (30), nähert und somit einen minimalen Abstand zu dieser ersten magnetischen Verzahnung an der Winkelposition 180° aufweist.

8. Uhrwerk nach einem der Ansprüche 1 bis 4, **dadurch gekennzeichnet, dass** die Gruppe ferromagnetischer Elemente zwei Elemente (24, 26) umfasst, die jeweils in einem Winkel relativ zur Bezugshalbachse (30) positioniert sind, dessen Wert gleich (M-1/2)·360°/N ist, wobei M eine ganze Zahl größer als ,1' und kleiner als N ist.

9. Uhrwerk nach Anspruch 4 oder Anspruch 8, in Abhängigkeit von Anspruch 4, **dadurch gekennzeichnet, dass** die Gruppe ferromagnetischer Elemente (24, 26) größtenteils oder vorzugsweise vollständig auf einer Seite gegenüber dem zweiten Rad (6) relativ zu einer geometrischen Ebene (38) angeordnet ist, die die Mittelachse (32) des ersten Rades umfasst und senkrecht zur Bezugshalbachse (30) verläuft.

## Claims

1. Timepiece mechanism comprising a magnetic gear (3) formed of a first wheel (4) and a second wheel (6), the first wheel being provided with N alternating first magnetic poles which are arranged circularly and define a first magnetic toothing (9), the second wheel being provided with teeth made of ferromagnetic material, or with alternating second magnetic poles arranged circularly, these teeth or these second magnetic poles defining a second magnetic toothing (7) which is magnetically coupled with the first magnetic toothing such that, when one of the first and second wheels is rotatably driven, this wheel (4) rolls, via the magnetic coupling, over a geometric circle centred on the other wheel (6) and linked to this other wheel; **characterised in that** the mechanism further comprises a ferromagnetic element (12; 12A; 16) or a set of ferromagnetic elements (24, 26) arranged relative to the first wheel so as to compensate for at least a major part of a parasitic magnetic torque (10) to which this first wheel is subjected and resulting from said magnetic coupling, this parasitic magnetic torque having a periodic variation in intensity as a function of the angular position (α) of the first wheel relative to a reference half-axis (30) starting from the central axis (32) of the first wheel and intercepting the central axis (34) of the second wheel.

2. Timepiece mechanism according to claim 1, **characterised in that** said ferromagnetic element or set of ferromagnetic elements is arranged so as to generate a compensating magnetic torque (18) which also has a periodic variation in intensity as a function of the angular position of the first wheel relative to said reference half-axis (30), the compensating magnetic torque and the parasitic magnetic torque having a phase shift of substantially 180°.

3. Timepiece mechanism according to claim 1 or 2, **characterised in that** said ferromagnetic element or set of ferromagnetic elements has a plane of symmetry (36) on which the reference half-axis (30) and the central axis (32) of the first wheel lie.

4. Timepiece mechanism according to any one of the preceding claims, **characterised in that** said ferromagnetic element or the set of ferromagnetic elements is arranged so as to generate, on the first wheel as a whole, a compensating magnetic attraction force which is aligned on the reference half-axis (30) with a direction opposite to that of a radial magnetic attraction force exerted as a whole by the second wheel on the first wheel.

5. Timepiece mechanism according to any one of the preceding claims, **characterised in that** the ferromagnetic element (12, 16, 22) comprises two end portions (13, 14) which extend in the direction of the first toothing (9), each positioned at an angle, relative to the reference half-axis (30), whose value is equal to (M-1/2)·360°/N, where M is an integer greater than '1' and less than N, and an intermediate portion (12A, 16A, 22A) connecting the two end portions.

6. Timepiece mechanism according to claim 5 which is dependent on claim 4, **characterised in that** the ferromagnetic element (16) further comprises a compensating portion (15) projecting towards the first toothing (9) from the intermediate portion (16A), this compensating portion being positioned at an angle, relative to the reference half-axis (30), the value of which angle is equal to 180° and serving to form the major part of the compensating magnetic attraction force.

7. Timepiece mechanism according to claim 5 which is dependent on claim 4, **characterised in that** the intermediate portion (22A) of the ferromagnetic element (22) is configured such that this intermediate portion moves closer to the first magnetic toothing (9) in the direction of the angular position equal to 180°, measured from the reference half-axis (30), thereby being at a minimum distance from this first magnetic toothing in the 180° angular position.

8. Timepiece mechanism according to any one of claims 1 to 4, **characterised in that** said set of ferromagnetic elements comprises two elements (24, 26), each positioned at an angle, relative to the reference half-axis (30), the value of which angle is equal to (M-1/2)·360°/N, where M is an integer greater than '1' and less than N.

9. Timepiece mechanism according to claim 4 or claim 8 which is dependent on claim 4, **characterised in that** the set of ferromagnetic elements (24, 26) is arranged for the most part or, preferably, entirely on a side opposite the second wheel (6) relative to a geometric plane (38) in which the central axis (32) of the first wheel lies and perpendicular to the reference half-axis (30).
